# EUROPÄISCHE PATENTANMELDUNG

(11) **EP 4 289 595 A1**
(43) Veröffentlichungstag der Anmeldung: **13.12.2023**
(21) Anmeldenummer: 23175429.2
(22) Anmeldetag: 25.05.2023
(51) Int. Cl.: B29C 45/14, B29C 39/10, B29C 41/20, B29C 70/76, B29C 69/00

(54) **VERFAHREN ZUM HERSTELLEN EINES BAUTEILS MIT FORMGEBENDEN SCHRITTEN**

(30) Priorität: 09.06.2022 DE 102022114534
(71) Anmelder: Elbe Flugzeugwerke GmbH, 01109 Dresden (DE)
(72) Erfinder: Nitsche, Steffen, 01109 Dresden (DE); Andrich, Manuela, 01109 Dresden (DE)
(74) Vertreter: LKGLOBAL Lorenz & Kopf Patentanwalt Attorney at Law PartG mbB

(57) **Zusammenfassung**

Es ist ein Verfahren zum Herstellen eines Werkstücks (105) aus einem Rohling angegeben. Das Verfahren weist die Schritte auf: Anfertigen des Rohlings; Zuschneiden des Rohlings auf eine vorgegebene Länge, um ein zugeschnittenes Werkstück zu erhalten; Anbringen eines Angusswerkzeugs (200) an einer Kante des zugeschnittenen Werkstücks, so dass sich ein Hohlraum zwischen dem Angusswerkzeug (200) und der Kante des zugeschnittenen Werkstücks (105) bildet; Auffüllen des Hohlraums mit einem gießbaren Material, um einen Konturbereich an dem zugeschnittenen Werkstück (105) zu bilden; Aushärten des in den Hohlraum aufgefüllten Materials; und Entfernen des Angusswerkzeugs (200).

## Beschreibung

### Technisches Gebiet

Die vorliegende Beschreibung betrifft im Allgemeinen Fertigungs- und Bearbeitungstechnik, insbesondere ein Verfahren zum Herstellen eines Werkstücks aus einem Rohling, welcher auch als Ausgangswerkstück bezeichnet werden kann.

### Technischer Hintergrund

In vielen technisch geschaffenen Umgebungen wird eine Innenverkleidung angebracht, um gewissen Anforderungen an den Aufenthalt von Personen in der Umgebung zu genügen. Beispielsweise werden Innenverkleidungen in Passagierkabinen von Fahrzeugen verwendet, um zu ermöglichen, dass Gegenstände verstaut und Inneneinrichtungskomponenten verkleidet werden, und um optischen Anforderungen zu genügen.

Beispielsweise müssen in bestimmten Umgebungen, wie in der Luftfahrt, kunststoffbasierte Verkleidungsbauteile bestimmten konstruktiven und optischen Vorgaben sowie Wünschen entsprechen.

Es kann notwendig sein, viele verschiedene geometrische Varianten eines Bauteils zu gestalten und zu fertigen. Hin und wieder werden die Bauteilvarianten in geringen Stückzahlen benötigt, was für die Fertigung einen hohen Aufwand mit sich bringt, weil beispielsweise die Fertigung von kunststoffbasierten Bauteilen vorrangig unter Einsatz von urformenden oder umformenden Verfahren erfolgt, wofür teure Werkzeuge notwendig sind.

Mit einer steigenden Anzahl geometrischer Varianten eines Bauteils nimmt die Anzahl von manuell ausgeführten Fertigungsschritten zu oder es ist für jede Bauteilvariante ein eigenes Werkzeug erforderlich. Beide Ansätze gehen mit einem hohen Ressourceneinsatz einher.

### Beschreibung

Es kann als Aufgabe betrachtet werden, den Aufwand in der Herstellung und Fertigung von individualisierbaren und unterschiedlichen Bauteilvarianten zu reduzieren.

Diese Aufgabe wird gelöst durch den Gegenstand des unabhängigen Anspruchs. Weitere Ausführungsformen ergeben sich aus den abhängigen Ansprüchen sowie aus der folgenden Beschreibung.

Es ist ein Verfahren zum Herstellen eines Werkstücks aus einem Rohling angegeben, das unter anderem die folgenden Schritte aufweist: Anfertigen des Rohlings; Zuschneiden des Rohlings auf ein vorgegebenes Maß, um ein zugeschnittenes Werkstück zu erhalten; Anbringen eines Angusswerkzeugs an einer Kante des zugeschnittenen Werkstücks, so dass sich ein Hohlraum zwischen dem Angusswerkzeug und der Kante des zugeschnittenen Werkstücks bildet; Auffüllen des Hohlraums mit einem gießbaren Material, um einen Konturbereich an dem zugeschnittenen Werkstück zu bilden; Aushärten des in den Hohlraum aufgefüllten Materials; Entfernen des Angusswerkzeugs.

Das Verfahren wird vorteilhaft benutzt, nachdem ein Rohling auf eine gewünschte Abmessung zugeschnitten wurde. In anderen Worten dient das Verfahren dazu, ein auf individuell gewünschte Maße, beispielsweise Länge und Breite, zugeschnittenes Werkstück aus einem größeren Rohling nachzubearbeiten und bestimmte Herstellungs- und Fertigungsschritte nach dem Zuschneiden durchzuführen. Bei diesen Herstellungs- und Fertigungsschritten handelt es sich insbesondere um solche Schritte, die an einer Kante ausgeführt werden und dazu dienen, an der Kante einen gewünschten Konturbereich zu bilden.

Das zugeschnittene Werkstück wird aus einem Rohling auf ein gewünschtes Maß geschnitten. Hierzu wird das zugeschnittene Werkstück an mindestens einer Schnittkante von dem Rohling getrennt, durch irgendein Schneide- oder Trennverfahren. Der Konturbereich kann insbesondere an einer Schnittkante gebildet werden. Natürlich kann der Konturbereich auch an einer anderen Kante, die nicht nach einem Schnitt entstanden ist, gebildet werden, also an einer Kante, die vor dem Angießen keinem Schneidevorgang ausgesetzt war.

Bei dem gebildeten Konturbereich kann es sich um das Anfertigen einer Abschlusskante des zugeschnittenen Werkstücks handeln, aber auch um das Bilden sonstiger gewünschter Konturen, wie beispielsweise eines Griffs, einem Befestigungspunkt zum Anbringen von externen Kräften und Lasten, etc.

Das Angusswerkzeug wird an einer Kante des zugeschnittenen Werkzeugs angebracht und ist mit diesem beispielsweise kraftschlüssig verbunden. Das Angusswerkzeug bildet mit mindestens einem Abschnitt einer Kante des zugeschnittenen Werkzeugs einen mindestens teilweise abgeschlossenen Hohlraum.

Das Angusswerkzeug ist beispielsweise aus einem geringfügig elastisch verformbaren Material gefertigt, damit das Angusswerkzeug auf die zu bearbeitende Kante aufgeschoben werden kann und mittels einer dem Angusswerkzeug innewohnenden Klemmkraft an dem zugeschnittenen Werkstück gehalten wird.

Das gießbare Material wird beispielsweise in einem erwärmten Zustand in den Hohlraum eingegossen. Hierzu kann das Angusswerkzeug eine oder mehrere Einlassöffnungen aufweisen, durch welche das gießbare Material in einem fließfähigen Zustand eingegossen wird. Das Angusswerkzeug weist eine Innenkontur auf, die der Form des zu bildenden Konturbereichs entspricht bzw. dessen Negativabdruck bildet.

Während das in den Hohlraum gegossene Material aushärtet, geht es eine Verbindung mit der Oberfläche der Kante ein, beispielsweise eine Klebeverbindung, indem das Material an der Kante bzw. einem Oberflächenabschnitt des zugeschnittenen Werkstücks haftet.

Sobald das Material ausgehärtet ist, kann das Angusswerkzeug entfernt werden. Hierzu kann das Angusswerkzeug auf seiner den Hohlraum bildenden Innenfläche mit einer Beschichtung versehen sein (oder alternativ aus einem Material mit den gewünschten Oberflächeneigenschaften gebildet sein), damit das in den Hohlraum eingegossene Material nicht an dem Angusswerkzeug haftet.

Zum Aushärten des in den Hohlraum aufgefüllten Materials kann das zugeschnittene Werkstück einer externen Energiequelle ausgesetzt werden, beispielsweise um thermische Energie oder elektromagnetische Strahlung zuzuführen, welche den Aushärtungsvorgang unterstützt.

In einer Variante enthält das Verfahren nach dem Zuschneiden des Rohlings den Schritt des Vorbereitens einer Verbindungsfläche an der Kante, um eine Verbindung zwischen dem zugeschnittenen Werkstück und dem gießbaren Material herzustellen.

Die Kante kann beispielsweise einem Reinigungsvorgang unterzogen werden oder die Kante kann weiteren formenden Schritten ausgesetzt sein, um die äußere Form und Gestalt des zugeschnittenen Werkstücks an der Kante strukturell anzupassen, damit die Güte der Verbindung zwischen der Kante und dem gießbaren Material verbessert wird. Beispielsweise können diese vorbereitenden Maßnahmen dazu führen, dass die Oberfläche im Bereich der Kante vergrößert wird, damit die Festigkeit der Klebe- oder Haftverbindung erhöht wird.

In einer Variante werden die Schritte des Verfahrens an einem Rohling ausgeführt, der in Leichtbauweise mit einer mehrere Lagen aufweisenden Sandwichstruktur ausgestaltet ist.

Bei dem Rohling kann es sich beispielsweise um eine sog. Sandwichstruktur handeln. Eine Leichtbauplatte bzw. eine Platte mit Sandwichstruktur weist üblicherweise zwei Decklagen und eine dazwischen angeordnet Kernschicht auf.

Die Kernschicht ist aus einem Material gebildet, das gegenüber den Decklagen eine deutlich geringere Dichte aufweist. Die Kernschicht kann beispielsweise aus Schaumkernen aus jedem geeigneten Material, wie beispielsweise PVC-Schaumstoff (Polyvinylchlorid-Schaumstoff), PET-Schaumstoff (Polyethylenterephthalat-Schaumstoff) oder jedem anderen geeigneten Schaumstoff bestehen. Es können allerdings auch andere Leichtbaustoffe, wie beispielsweise Kork, verwendet werden. Die Kernschichten können aber auch als Wabenkerne jeder Art, wie beispielsweise mit Waben aus Kunststoffen, Pappen oder anderen geeigneten Materialen mit den benötigten Eigenschaften, ausgeführt sein. Bevorzugt sind die Kernschichten jedoch als Schaumkerne mit PET-Schaumstoff ausgeführt.

Die Decklagen sind aus stabilen Materialen mit höherer Dichte im Vergleich zu der Kernschicht gebildet. Hierzu kann jedes geeignete Material wie beispielsweise Holz, Kunststoffe oder verschiedene Laminate verwendet werden. Bevorzugt sind die Decklagen aus in Phenolharz getränktem Glasfasergeflecht oder aus Kohlenstofffaser-Laminat gefertigt.

Die stabilen Decklagen verteilen Drucklasten senkrecht zu der Flächennormalen der Leichtbauplatte gleichmäßig auf die leichten Kernschichten, wodurch die Kernschichten in der Lage sind, die Drucklasten aufzunehmen. Außerdem werden Schublasten beim Biegen der Leichtbauplatten von dem leichten Material der Kernschichten gut aufgenommen. Die Decklagen hingegen widerstehen Zug- und Drucklasten in der Plattenebene. Dies führt zu ausgezeichneter Stabilität der Leichtbauplatten bei gleichzeitig geringem Gewicht.

Solche Sandwichstrukturen bzw. Leichtbauplatten werden bevorzugt in Fahrzeugen verwendet, weil sie bei einem vergleichsweise niedrigen Gewicht eine hohe mechanische Festigkeit bieten.

Das hier beschriebene Verfahren kann also so verwendet werden, dass zunächst ein Rohling (Ausgangswerkstück) in Sandwichbauweise angefertigt wird. Aus diesem Ausgangswerkstück werden dann mehrere zugeschnittene Werkstücke auf das gewünschte Maß geschnitten. Diese zugeschnittenen Werkstücke werden anschließend dem hier beschriebenen Verfahren unterzogen, um einen gewünschten Konturbereich an der Kante zu bilden.

Somit ist es nicht nötig, für jede Bauteilvariante ein gesondertes Werkzeug anzufertigen, in welchem sowohl der Grundkörper als auch die Konturbereiche an den Kanten gefertigt werden. Vielmehr wird zunächst ein Grundkörper mit Standardmaßen angefertigt, zurechtgeschnitten und dann einer abschließenden Bearbeitung zum Bilden der Konturbereiche unterzogen.

In einer Variante enthält der Schritt des Vorbereitens der Verbindungsfläche an der Kante das Abtragen eines Teils einer Lage des Rohlings.

Ein Teil einer Lage, bevorzugt der Kernschicht der Sandwichstruktur, wird so abgetragen, dass der abgetragene Teil der Kernschicht sich an den von dem Angusswerkzeug gebildeten Hohlraum anschließt. Wird dann das gießbare Material in das Angusswerkzeug gefüllt, breitet sich das gießbare Material in dem Hohlraum und dem Bereich der abgetragenen Kernschicht aus.

In einer Variante enthält das Verfahren den Schritt des Abtragens einer Kernschicht, die zwischen zwei Decklagen angeordnet ist.

Somit wird der Hohlraum, in den das gießbare Material fließt, vergrößert. Weiterhin verbindet sich das gießbare Material dann auch mit einem größeren Oberflächenbereich der Decklagen, nämlich dort, wo die Kernschicht abgetragen ist, um die Festigkeit der Verbindung zwischen gießbarem Material und zugeschnittenem Werkstück zu erhöhen.

In einer Variante wird das Angusswerkzeug so an der Kante des zugeschnittenen Werkstücks angebracht, dass jeweils ein Schenkel des Angusswerkzeugs an gegenüberliegenden Oberflächen des zugeschnittenen Werkstücks anliegt und den gebildeten Hohlraum zwischen dem Angusswerkzeug und dem zugeschnittenen Werkstück abdichtet.

Das Angusswerkzeug weist ein im Wesentlichen U-förmiges Profil auf, welches von einer Grundfläche und zwei davon abragenden Schenkeln gebildet wird. Das Angusswerkzeug wird auf die Kante des zugeschnittenen Werkstücks so aufgeschoben, dass das zugeschnittene Werkstück in dem U-Profil zwischen den beiden Schenkeln aufgenommen wird. Hierbei wird das zugeschnittene Werkstück aber nur für eine vorgegebene Tiefe in das Angusswerkzeug geschoben, damit das Angusswerkzeug den Hohlraum bildet, um das gießbare Material aufzunehmen.

Die Schenkel des Angusswerkzeugs umgreifen die äußeren Lagen der Sandwichstruktur und liegen auf den Oberflächen dieser äußeren Lagen an.

Die Innengeometrie des Angusswerkzeugs kann dabei beliebige Formen annehmen. Durch diese Innengeometrie wird die Form der angegossenen Kontur definiert.

In einer Variante wird das Angusswerkzeug so an dem zugeschnittenen Werkstück angebracht, dass die Kante umlaufend abgedichtet ist.

Die Schenkel des Angusswerkzeugs umfassen die Kante des zugeschnittenen Werkstücks. Das Angusswerkzeug enthält mindestens eine Öffnung, durch welche das gießbare Material in den gebildeten Hohlraum eingeführt wird. Bei diesem Vorgang kann das zugeschnittene Werkstück so ausgerichtet sein, dass das gießbare Material durch die Wirkung der Schwerkraft auf der Kante zum Liegen kommt. Die Öffnung zum Eingießen des gießbaren Materials kann dann in dem Angusswerkzeug gegenüberliegend zu der Kante des zugeschnittenen Werkstücks angeordnet sein, so dass das gießbare Material nicht durch die Öffnung des Angusswerkzeugs entweichen kann.

Sobald das gießbare Material mindestens teilweise ausgehärtet ist, kann das Angusswerkzeug entfernt werden. Dies kann dann erfolgen, wenn das gießbare Material soweit ausgehärtet ist, dass es eine Klebeverbindung mit der Kante eingegangen ist und sich nach dem Entfernen des Angusswerkzeugs nicht mehr verformt.

Das zugeschnittene Werkstück mitsamt dem gießbaren Material und dem Angusswerkzeug kann einem Verarbeitungsschritt zugeführt werden, in welchem der Aushärtungsvorgang des gießbaren Materials unterstützt wird. Beispielsweise indem das gießbare Material mit Energie beaufschlagt wird, z.B. mit thermischer Energie oder auch mit UV-Strahlung oder Infrarot-Strahlung, welche einen Aushärtungsvorgang bestimmter Materialien beschleunigen kann. Zu diesem Zweck kann das Angusswerkzeug aus einem Material gefertigt sein, welches für thermische Energie und/oder für UV-Strahlung sowie Infrarot-Strahlung durchlässig ist oder mindestens diesbezüglich keine hohen Dämpfungs- oder Isolationseigenschaften hat.

In einer Variante wird das Angusswerkzeug so an dem zugeschnittenen Werkstück angebracht, dass Schenkel des Angusswerkzeugs flächig an äußeren Oberflächen des zugeschnittenen Werkstücks anliegen.

Das Angusswerkzeug liegt nicht nur punktuell an dem zugeschnittenen Werkstück an, sondern flächig. Bevorzugt verlaufen die Schenkel parallel zu den äußeren Oberflächen des zugeschnittenen Werkstücks, und zwar in dem Bereich, welcher sich an die Kante des zugeschnittenen Werkstücks anschließt. Das kann dazu beitragen, dass das gießbare Material bündig mit den äußeren Oberflächen des zugeschnittenen Werkstücks abschließt.

Mit zunehmendem Abstand zu der Kante des zugeschnittenen Werkstücks kann die Konturlinie des Angusswerkzeugs (der Verlauf der Innenfläche) einem anderen Verlauf folgen, um das gießbare Material in die gewünschte Form zu bringen.

In einer Variante ist das in den Hohlraum aufgefüllte gießbare Material ausgewählt aus der Gruppe bestehend aus einem Harz, einer Zwei-Komponenten-Mischung, einer polymerbasierten Rohmasse.

In einer Variante ist das in den Hohlraum aufgefüllte gießbare Material mit einem Zusatzstoff versetzt.

Bei dem Zusatzstoff kann es sich beispielsweise um Fasern wie Verstärkungsfasern in Form von Glasfasern oder textile Fasern handeln, welche dazu dienen, die mechanischen Eigenschaften des angegossenen Konturbereichs zu beeinflussen. Die Zusatzstoffe können auch dazu dienen, eine Schrumpfung des angegossenen Konturbereichs zu vermindern.

Mit dem hier beschriebenen Verfahren kann ein Bauteil nach einem Vorgang des Zuschneidens auf gewünschte Maße diversen Bearbeitungsschritten unterzogen werden, um einen Konturbereich an einer Kante zu bilden. Damit ist es nicht nötig, für verschieden große Werkstücke separate Werkzeuge anzufertigen, sondern es ist ausreichend, wenn ein auf die Kante des zugeschnittenen Werkstücks und auf die gewünschte Geometrie des gebildeten Konturbereichs angepasstes Angusswerkzeug bereitgestellt wird. Mit Hilfe eines solchen Angusswerkzeugs kann ein Konturbereich oder eine Kantengeometrie geformt werden, welche sich durch einen nahtfreien Übergang zwischen der äußeren Oberfläche des zugeschnittenen Werkstücks und dem geformten Konturbereich auszeichnet.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Rohlings, welcher als Ausgangswerkstück zum Fertigen eines zugeschnittenen Werkstücks dient.
- Fig. 2: eine schematische Darstellung eines Rohlings sowie des Schrittes des Zuschneidens auf eine gewünschte Größe.
- Fig. 3: eine schematische Querschnittdarstellung eines zugeschnittenen Werkstücks.
- Fig. 4: eine schematische Darstellung eines zugeschnittenen Werkstücks mit angesetzter Angussform.
- Fig. 5: eine schematische Darstellung eines zugeschnittenen Werkstücks.
- Fig. 6: eine schematische Querschnittdarstellung eines zugeschnittenen Werkstücks mit aufgesetzter Angussform.
- Fig. 7: eine schematische Querschnittdarstellung eines zugeschnittenen Werkstücks mit aufgesetzter Angussform.
- Fig. 8: eine schematische Darstellung der Schritte eines Verfahrens zum Herstellen eines Werkstücks.

### Detaillierte Beschreibung von Ausführungsbeispielen

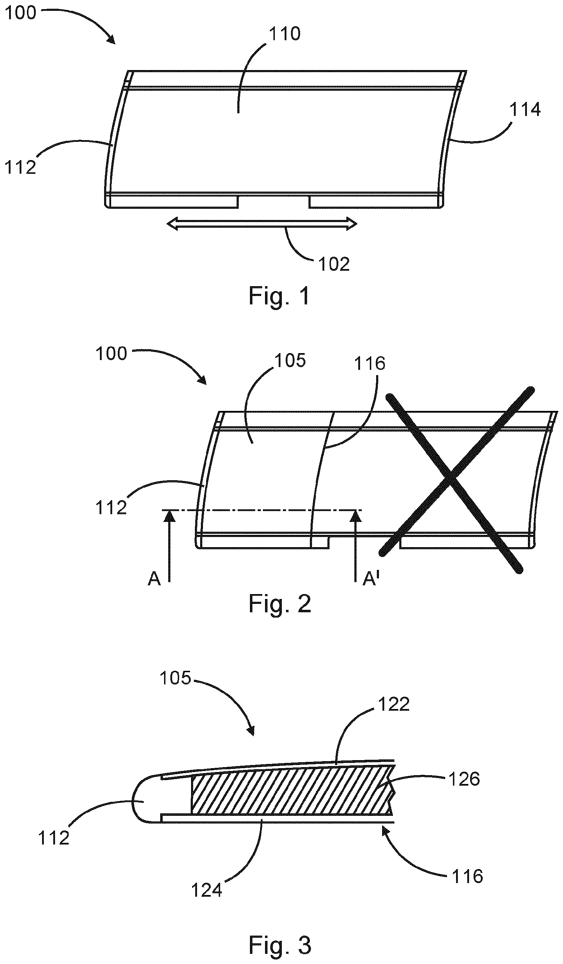

Fig. 1 zeigt einen Rohling 100, der auch als Ausgangswerkstück bezeichnet werden kann. Der Rohling 100 hat eine Erstreckung in Längsrichtung 102. Beispielhaft wird hier eine Kürzung des Rohlings in dieser Längsrichtung 102 beschrieben. Dies ist jedoch nicht einschränkend zu verstehen. Vielmehr kann das hier beschriebene Verfahren auf jegliche Anpassung der Maße eines zugeschnittenen Werkstücks angewandt werden.

Der Rohling 100 weist einen Körper 110 auf. An dem Körper 110 ist eine erste Abschlusskante 112 und eine in Längsrichtung 102 am entgegengesetzten Ende angeordnete zweite Abschlusskante 114 angeordnet.

Wenn die Maße des Rohlings 100 für eine bestimmte Anwendung nicht geeignet sind, muss der Rohling 100 zugeschnitten werden.

Fig. 2 zeigt prinzipiell, wie aus dem Rohling 100 ein zugeschnittenes Werkstück 105 geschnitten wird. Von dem Rohling 100 wird ein Abschnitt entlang der Kante 116 abgeschnitten oder auf andere Weise getrennt, um ein zugeschnittenes Werkstück 105 mit gewünschten Maßen zu erhalten.

Die Kante 116 erfordert nach dem Schneiden, dass hier ein Konturbereich gebildet wird, sei es aus technisch-funktionalen oder aus Gründen des Designs.

Um nicht für jedes erforderliche Maß eines Werkstücks eine gesonderte Maschine bzw. ein Werkzeug anzufertigen, welches das zugeschnittene Werkstück insgesamt fertigt, also mitsamt Körper und Konturbereichen, beispielsweise an den Kanten, wird nun das zugeschnittene Werkzeug 105 aus einem Rohling 100 auf Maß geschnittenen und die Konturbereiche an den Kanten mit dem hier beschriebenen Verfahren gebildet.

Fig. 3 zeigt eine Ansicht des Querschnitts entlang der Schnittlinie A-A' aus Fig. 2. In dieser Querschnittsansicht ist zunächst die erste Abschlusskante 112 zu sehen, welche nach dem Zuschneiden in Fig. 2 an dem zugeschnittenen Werkstück 105 verbleibt.

In Fig. 3 ist das zugeschnittene Werkstück als ein Sandwichbauteil mit einer ersten Decklage 122, einer zweiten Decklage 124 und einer dazwischen angeordneten Kernschicht 126 gezeigt. Das zugeschnittene Werkstück hat auf seiner rechten Seite eine Schnittkante 116. Insbesondere bei Leichtbauplatten oder Sandwichstrukturen ist es vorteilhaft, die offene Schnittkante nicht in diesem Zustand zu belassen, sondern die Schnittkante mit einem Konturbereich zu versehen.

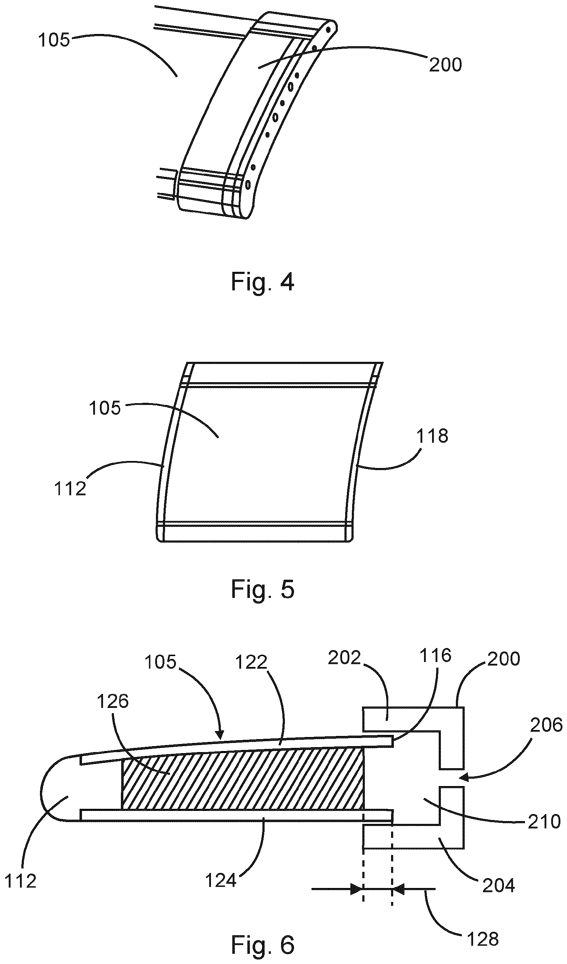

Fig. 4 zeigt das zugeschnittene Werkstück 105 mit einem auf die Schnittkante 116 aufgesetzten Angusswerkzeug 200.

Das Angusswerkzeug wird so auf die Schnittkante 116 aufgeschoben, dass sich zwischen der Schnittkante und der Innenfläche des Angusswerkzeugs 200 ein Hohlraum bildet, in welchen ein gießbares Material gefüllt werden kann. Nach dem Aushärtungsvorgang des gießbaren Materials wird das Angusswerkzeug 200 entfernt und die Schnittkante ist mit einer angegossenen Abschlusskante 118 versehen, wie in Fig. 5 gezeigt.

In Fig. 6 ist gezeigt, wie das Angusswerkzeug 200 auf das zugeschnittene Werkstück 105 aufgesteckt ist. Für Details zum Aufbau des zugeschnittenen Werkstücks wird auf Fig. 3 verwiesen.

Das Angusswerkzeug 200 weist einen ersten Schenkel 202 und einen zweiten Schenkel 204 auf. Das zugeschnittene Werkstück 105 wird zwischen den Schenkeln 202 und 204 aufgenommen, so dass jeder Schenkel 202, 204 an jeweils einer Oberfläche der Decklagen 122, 124 anliegt. Das Profil des Angusswerkzeugs 200 ist im Wesentlichen U-förmig. In dem Angusswerkzeug ist eine Öffnung 206 angebracht, um das gießfähige Material in den Hohlraum 210, der zwischen Angusswerkzeug 200 und zugeschnittenem Werkstück 105 gebildet ist, einfüllen zu können. Das gießbare Material kann manuell oder maschinell in den Hohlraum 210 gefüllt werden. Hierbei kann auf geeignete Werkzeuge zurückgegriffen werden, um das gießbare Material durch die Öffnung 206 zu bringen. Die Dimensionen der Öffnung 206 können auf die Zusammensetzung und/oder Fließfähigkeit des gießbaren Materials abgestimmt sein. Beispielsweise kann ein zäheres Material einen größere Öffnung 206 erfordern, um diese nicht zu verstopfen. Bevor das gießbare Material in den Hohlraum 210 gefüllt wird, kann es bestimmten vorbereitenden Schritten unterzogen werden, z.B. Mischen von Komponenten, erhitzen, etc. Sobald das gießbare Material in dem geeigneten Zustand ist, um in den Hohlraum gegossen zu werden und dort auszuhärten, wird es entsprechend eingebracht.

Ausgehend von der Kante 116 ist die Kernschicht 126 bis zu einer bestimmten Tiefe abgetragen, um eine Ausnehmen 128 zwischen den Decklagen 122, 124 zu bilden. In diese Ausnehmung 128 und den Hohlraum 210 dringt das gießfähige Material ein und geht eine Haftverbindung mit den Decklagen 122, 124 ein.

Der von dem gießfähigen Material geformte Konturbereich kann grundsätzlich beliebige Formen annehmen. Die Form des Konturbereichs wird durch die Form der Innenfläche des Angusswerkzeugs vorgegeben.

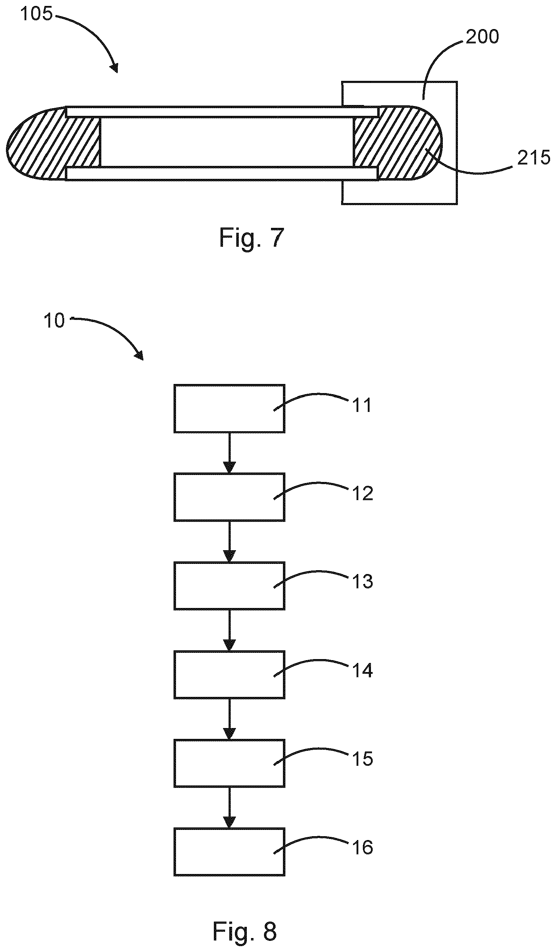

Fig. 7 zeigt eine vereinfachte Darstellung des zugeschnittenen Werkstücks 105 (entspricht dem Aufbau aus Fig. 6 und Fig. 3) mit einem platzierten Angusswerkzeug 200 sowie darin angeordnetem Material 215, welches den gewünschten Konturbereich bildet.

Es ist denkbar, dass das Angusswerkzeug 200 auf die Decklagen 122, 124 eine Druckkraft ausübt, wenn das Angusswerkzeug 200 auf das zugeschnittene Werkstück 105 aufgeschoben wird. Dieser Druck kann dazu führen, die Decklagen in eine bestimmte relative Lage zueinander zu bringen und das gießfähige Material 215 in diesem Zustand aushärten zu lassen. Somit können geringfügige Verformungen im Bereich der Kante des zugeschnittenen Werkstücks in diesem Schritt der Bearbeitung eingebracht werden.

Fig. 8 zeigt zusammenfassend eine Darstellung der Schritte des Verfahrens, wie sie schon mit Bezug zu den Fig. 1 bis 7 beschrieben wurden. Das Verfahren wird allgemein mit dem Bezugszeichen 10 referenziert und enthält die folgenden Schritte: in einem ersten Schritt 11, Anfertigen des Rohlings 100, wie in Fig. 1 gezeigt; in einem zweiten Schritt 12, Zuschneiden des Rohlings 100 auf eine vorgegebene Länge, um ein zugeschnittenes Werkstück 105 zu erhalten wie in Fig. 2 gezeigt; in einem dritten Schritt 13, Anbringen eines Angusswerkzeugs 200 an einer Kante 116 des zugeschnittenen Werkstücks 105, so dass sich ein Hohlraum 210 zwischen dem Angusswerkzeug 200 und der Kante 116 des zugeschnittenen Werkstücks 105 bildet, wie in Fig. 4 und Fig. 6 gezeigt; in einem vierten Schritt 14, Auffüllen des Hohlraums 210 mit einem gießbaren Material 215, wie in Fig. 7 gezeigt; in einem fünften Schritt 15, Aushärten des in den Hohlraum 210 aufgefüllten Materials 215; in einem sechsten Schritt 16, Entfernen des Angusswerkzeugs 200.

Optional können nach dem sechsten Schritt noch weitere Schritte folgen, welche eine Bearbeitung des angegossenen Konturbereichs enthalten, beispielsweise Schritte, um die Oberfläche des angegossenen Konturbereichs zu bearbeiten, durch schleife, polieren, oder ähnliches.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Rohling
- 102: Längsrichtung
- 105: zugeschnittenes Werkstück
- 110: Körper
- 112: erste Abschlusskante
- 114: zweite Abschlusskante
- 116: Kante, Schnittkante
- 118: angegossene Abschlusskante
- 122: obere Decklage
- 124: untere Decklage
- 126: Kernschicht
- 128: Ausnehmung

- 200: Angusswerkzeug
- 202: erster Schenkel
- 204: zweiter Schenkel
- 206: Öffnung
- 210: Hohlraum
- 215: konturbildendes Material

## Patentansprüche

1. Verfahren (10) zum Herstellen eines Werkstücks (105) aus einem Rohling (100), das Verfahren aufweisend die Schritte:
Anfertigen des Rohlings (100);
Zuschneiden des Rohlings (100) auf ein vorgegebenes Maß, um ein zugeschnittenes Werkstück (105) zu erhalten;
Anbringen eines Angusswerkzeugs (200) an einer Kante (116) des zugeschnittenen Werkstücks (105), so dass sich ein Hohlraum (210) zwischen dem Angusswerkzeug (200) und der Kante (116) des zugeschnittenen Werkstücks (105) bildet;
Auffüllen des Hohlraums (210) mit einem gießbaren Material (215), um einen Konturbereich an dem zugeschnittenen Werkstück (105) zu bilden;
Aushärten des in den Hohlraum (210) aufgefüllten Materials (215);
Entfernen des Angusswerkzeugs (200).

2. Verfahren (10) nach Anspruch 1, weiter aufweisend:
nach dem Zuschneiden des Rohlings (100), Vorbereiten einer Verbindungsfläche an der Kante (116), um eine Verbindung zwischen dem zugeschnittenen Werkstück (105) und dem gießbaren Material herzustellen.

3. Verfahren (10) nach Anspruch 2,
wobei die Schritte des Verfahrens an einem Rohling (100) ausgeführt werden, der in Leichtbauweise mit einer mehrere Lagen (122, 124, 126) aufweisenden Sandwichstruktur ausgestaltet ist.

4. Verfahren (10) nach Anspruch 3,
wobei das Vorbereiten der Verbindungsfläche an der Kante (116) das Abtragen eines Teils einer Lage (126) des Rohlings (100) enthält.

5. Verfahren (10) nach Anspruch 4,
wobei das Verfahren den Schritt des Abtragens einer Kernschicht (126), die zwischen zwei Decklagen (122, 124) angeordnet ist, enthält.

6. Verfahren (10) nach einem der voranstehenden Ansprüche,
wobei das Angusswerkzeug (200) so an der Kante (116) des zugeschnittenen Werkstücks (105) angebracht wird, dass jeweils ein Schenkel (202, 204) des Angusswerkzeugs (200) an gegenüberliegenden Oberflächen des zugeschnittenen Werkstücks (105) anliegt und den gebildeten Hohlraum (210) zwischen dem Angusswerkzeug (200) und dem zugeschnittenen Werkstück (105) abdichtet.

7. Verfahren (10) nach einem der voranstehenden Ansprüche,
wobei das Angusswerkzeug (200) so an dem zugeschnittenen Werkstück (105) angebracht wird, dass die Kante (116) umlaufend abgedichtet ist.

8. Verfahren (10) nach einem der voranstehenden Ansprüche,
wobei das Angusswerkzeug (200) so an dem zugeschnittenen Werkstück (105) angebracht wird, dass Schenkel (202, 204) des Angusswerkzeugs (200) flächig an äußeren Oberflächen des zugeschnittenen Werkstücks (105) anliegen.

9. Verfahren (10) nach einem der voranstehenden Ansprüche,
wobei das in den Hohlraum (210) aufgefüllte gießbare Material (215) ausgewählt ist aus der Gruppe bestehend aus einem Harz, einer Zwei-Komponenten-Mischung, einer polymerbasierten Rohmasse.

10. Verfahren (10) nach einem der voranstehenden Ansprüche,
wobei das in den Hohlraum (210) aufgefüllte gießbare Material (215) mit einem Zusatzstoff versetzt ist.
